# EUROPÄISCHE PATENTANMELDUNG

(11) **EP 1 063 561 A1**
(43) Veröffentlichungstag der Anmeldung: **27.12.2000**
(21) Anmeldenummer: 00109158.6
(22) Anmeldetag: 08.05.2000
(51) Int. Cl.: G02F 1/1335

(54) **Flüssigkristallanzeige**

(30) Priorität: 05.01.2000 DE 10000300; 11.06.1999 DE 19926797
(71) Anmelder: Mannesmann VDO Aktiengesellschaft, 60388 Frankfurt am Main (DE)
(72) Erfinder: Brandt, Peter, 63739 Aschaffenburg (DE); Tippl, Dietmar, 65779 Kelkheim (DE)
(74) Vertreter: Klein, Thomas, Dipl.-Ing.

(57) **Zusammenfassung**

Bei einer Flüssigkristallanzeige (1) ermöglicht eine seitlich angeordnete Lichteinkoppelfläche (2) die aktive Beleuchtung der Flüssigkristallanzeige (1) mittels einer Lichtquelle (3). Hierzu hat die Flüssigkristallanzeige (1) ein Lichtumlenkelement (7), welches die einfallende Lichtstrahlung in Richtung einer Flüssigkristallzelle (5) umlenkt. An einem rückwärtigen, reflektiven Element (10) wird das mittels eines Rückpolarisationsfilters (9) polarisierte Licht reflektiert und in die Flüssigkristallzelle (1) umgelenkt. An einer mit einem Frontpolarisationsfilter (13) versehenen Vorderseite (14) der Flüssigkristallanzeige (1) erfolgt so die segmentierte Darstellung. Gegenüber bekannten Flüssigkristallanzeigen mit einem Transflektor kann dadurch eine mögliche Farbabweichung und die damit verbundene eingeschränkte Ablesbarkeit erheblich vermindert werden. Zugleich wird der Herstellungsaufwand und der erforderliche Bauraum wesentlich reduziert.

## Beschreibung

Die Erfindung betrifft eine beleuchtbare Flüssigkristallanzeige, insbesondere in einem Kraftfahrzeug, mit einem Frontpolarisationsfilter, einem Rückpolarisationsfilter und einer durch zwei jeweils mit Elektroden verbundene Substrate eingeschlossenen Flüssigkristallzelle sowie einem hinter dem Rückpolarisationsfilter angeordneten, reflektiven Element.

Eine solche Flüssigkristallanzeige wird in der Praxis eingesetzt, um einerseits im Tagbetrieb eine Darstellung mittels des einfallenden Umgebungslichtes zu erreichen (reflektiver Betrieb), andererseits im Nachtbetrieb eine aktive Beleuchtung mittels einer Lichtquelle zu ermöglichen. Hierzu besitzt das reflektive Element als Transflektor eine einstellbare Transmission, so dass das einfallende Umgebungslicht reflektiert, zugleich jedoch das von der Lichtquelle ausgehende Licht - bis auf eine unvermeidliche, von der Transmission des Transflektors abhängige Abschwächung - ungehindert von der Rückseite des Transflektors einstrahlen kann. Durch die so geschaffene Möglichkeit, in Abhängigkeit der Umgebungshelligkeit mittels der Lichtquelle eine gewünschte Helligkeit einzustellen, wird auch bei veränderlicher Umgebungshelligkeit stets eine zum Ablesen der Flüssigkristallanzeige ausreichende Helligkeit gewährleistet.

Als nachteilig bei dem beschriebenen Stand der Technik hat sich jedoch erwiesen, dass mit der Veränderung der reflektiven bzw. transmissiven Eigenschaften des reflektiven Elementes zugleich auch eine Veränderung des Farbspektrums verbunden ist. Infolgedessen können Farbverfälschungen entstehen, durch die die Ablesbarkeit der Flüssigkristallanzeige erschwert wird.

Der Erfindung liegt daher das Problem zugrunde, eine Flüssigkristallanzeige der eingangs genannten Art zu schaffen, bei der Farbverfälschungen infolge der Umstellung vom reflektiven auf transflektiven oder transmissiyen Betrieb der Flüssigkristallanzeige minimiert sind. Dabei soll insbesondere auch die Ablesbarkeit der Flüssigkristallanzeige verbessert werden.

Dieses Problem wird erfindungsgemäß dadurch gelöst, dass die Flüssigkristallanzeige ein Lichtumlenkelement zur Umleitung von seitlich in eine Lichteinkoppelfläche der Flüssigkristallanzeige einfallendem Licht in Richtung der Flüssigkristallzelle aufweist. Hierdurch erfordert das reflektive Element bei der aktiven Beleuchtung keine transflektive Eigenschaft, da einstrahlendes Licht einer Lichtquelle nicht durch das reflektive Element hindurchtreten muss, so dass Farbverfälschungen minimiert sind. Zur aktiven Beleuchtung wird dabei das Licht, beispielsweise mittels eines Lichtleiters, der Lichteinkoppelfläche zugeführt und an dem Lichtumlenkelement so umgeleitet, dass es ebenso wie das Umgebungslicht im Tagbetrieb an dem beispielsweise als Spiegel ausgeführten, reflektiven Element reflektiert wird und in die Flüssigkristallzelle einstrahlt. Dabei werden zugleich auch die mit dem Einsatz eines Transflektors verbundenen Helligkeitsverluste merklich verringert. Weiterhin kann dabei eine kompakte, insbesondere sehr flache Bauform erreicht werden, bei der zusätzlich auch auf eine aufwendige Steuereinheit für das reflektive Element verzichtet werden kann. Durch die Kompaktheit und geringes Gewicht der erfindungsgemäßen Flüssigkristallanzeige eignet sich diese besonders für einen Einsatz in Kraftfahrzeugen, da die Ziele einer guten Raumausnutzung und maximalen Gewichtsreduzierung besonders bei modernen Fahrzeugen als vordringlich angesehen werden.

Das Lichtumlenkelement und die Lichteinkoppelfläche können an einem separaten Bauelement angeordnet werden, das je nach den individuellen Anforderungen an die Flüssigkristallanzeige hinzugefügt wird. Eine andere besonders günstige Ausführungsform der Erfindung ist hingegen dann gegeben, wenn das Lichtumlenkelement an einer der Flüssigkristallzelle zugewandten Oberfläche zumindest eines der beiden Substrate angeordnet ist. Hierdurch entfällt ein zusätzliches Bauelement, so dass der erforderliche Bauraum weiter reduziert werden kann. Dabei dient das Substrat zugleich als Lichtleiter für die mittels der Lichteinkoppelfläche eingekoppelte Lichtstrahlung und ermöglicht so eine gleichmäßige Lichtverteilung mit einheitlicher Helligkeit.

Dabei ist eine besonders vorteilhafte Weiterbildung der Erfindung dadurch gegeben, dass das Lichtumlenkelement an einer einem Betrachter der Flüssigkristallanzeige abgewandten Seite des Rückpolarisationsfilters angeordnet ist. Hierdurch wird das Licht unmittelbar in Richtung der Vorderseite der Flüssigkristallanzeige umgelenkt, so dass im aktiv beleuchteten Betrieb keine Lichtumleitung an dem reflektiven Elemente erforderlich ist. Die einzelnen Bauelemente der Flüssigkristallanzeige werden dabei von dem eingekoppelten Licht nur in jeweils einer Richtung passiert, so dass mögliche Helligkeitsverluste weiter reduziert werden können.

Eine besonders vorteilhafte Ausgestaltung der Erfindung ist dann gegeben,wenn eines der Substrate die Lichteinkoppelfläche aufweist und wenn die Lichteinkoppelfläche an einer Stirnfläche des die Lichteinkoppelfläche aufweisenden Substrates angeordnet ist. Das entsprechende Substrat ermöglicht dabei als integrales Bauelement zugleich einerseits die Einkopplung von zusätzlicher Lichtstrahlung mittels der Lichteinkoppelfläche, andererseits das ungehinderte Hindurchtreten der durch die Vorderseite der Flüssigkristallanzeige eintretenden Umgebungshelligkeit. Ein derart ausgeführtes Substrat kann daher problemlos gegen ein herkömmliches Substrat ausgetauscht werden und erfordert demnach keine aufwendige Neukonstruktion. Weitere Ausführungsformen, bei denen beide Substrate mit entsprechenden Lichteinkoppelflächen und Lichtumlenkelementen ausgestattet sind, ermöglichen beispielsweise eine wahlweise unterschiedlich helle Beleuchtung.

Eine andere besonders günstige Weiterbildung der Erfindung ist dadurch gegeben, dass eine der Lichteinkoppelfläche gegenüberliegende Stirnfläche der Flüssigkristallanzeige mit einem Reflektor versehen ist. Hierdurch können Helligkeitsverluste durch das unkontrollierte Austreten des eingekoppelten Lichtes an einer der Lichteinkoppelfläche abgewandten Seite verhindert werden. Eine solche, beispielsweise als Beschichtung ausgeführte, Spiegelfläche ermöglicht daher eine weitere Verbesserung des Wirkungsgrades bei der aktiven Beleuchtung. Dabei können zusätzlich auch weitere Seitenflächen und auch die über eine Darstellungsfläche der Flüssigkristallanzeige hinausgehenden Randflächen mit einem solchen Reflektor ausgestattet sein.

Besonders einfach ist dabei eine Ausführungsform der Erfindung, bei der das Lichtumlenkelement als eine Strukturfläche ausgeführt ist. Ein derart ausgeführtes Lichtumlenkelement ermöglicht im wesentlichen unveränderte äußere Abmessungen der Flüssigkristallanzeige. Dabei verhindert eine beispielsweise als Mikrostruktur ausgeführte Strukturfläche zugleich lokale Helligkeitsdifferenzen und führt somit zu einer weiter verbesserten Ablesbarkeit. Die Strukturfläche kann hierzu beispielsweise auch als Textur oder Linsenstruktur ausgeführt und sowohl an der Oberfläche als auch im Inneren eines transparenten Elementes angeordnet sein.

In die Lichteinkoppelfläche kann mittels eines Lichtleiters vergleichsweise helles Umgebungslicht, welches der Flüssigkristallanzeige nicht unmittelbar zugänglich ist, oder das Licht unabhängiger Beleuchtungseinheiten einstrahlen. Eine besonders vorteilhafte Weiterbildung der Erfindung ist hingegen auch dann gegeben, wenn die Flüssigkristallanzeige eine in die Lichteinkoppelfläche einstrahlende Lichtquelle aufweist. Eine solche Lichtquelle ermöglicht die optimale Anpassung der erforderlichen Beleuchtungsstärke nach den jeweils vorherrschenden Betriebsbedingungen. Hierzu kann die Lichtquelle beispielsweise auch elektronisch dimmbar sein, um so einen fließenden Übergang zwischen passiver Beleuchtung mittels Umgebungshelligkeit und aktiver Beleuchtung mittels der Lichtquelle zu ermöglichen.

Dabei ist eine besonders gut geeignete Weiterbildung der Erfindung dadurch gegeben, dass die Lichtquelle eine Entladungslampe ist. Die Entladungslampe ermöglicht aufgrund ihrer großen Helligkeit bei zugleich vergleichsweise geringer Wärmeabstrahlung eine Ablesbarkeit auch bei Negativ-Darstellung der Flüssigkristallanzeige, bei der die angesteuerten Segmente hell gegenüber dem im übrigen dunklen Hintergrund hervortreten.

Demgegenüber ist eine andere vorteilhafte Weiterbildung der Erfindung dann erreicht, wenn die Lichtquelle eine Leuchtdiode (LED) aufweist. Durch den geringen Energieverbrauch und die Langlebigkeit einer derart ausgeführten Flüssigkristallanzeige wird auch der Einsatz abseits der ständigen Netzversorgung möglich. Dabei ist beispielsweise die Verwendung bei tragbaren und Batterie- oder akkumulatorbetriebenen Geräten möglich. Die Leuchtdiode (LED) eignet sich dabei vor allem zur Positiv-Darstellung, bei der die angesteuerten Segmente als abgedunkelte Flächen auf dem im übrigen hell beleuchteten Hintergrund dargestellt sind.

Die Farbverfälschungen der Flüssigkristallanzeige in Folge der Umstellung vom reflektiven auf transflektiven oder transmissiven Betrieb können gemäß einer anderen vorteilhaften Weiterbildung der Erfindung in weiten Grenzen nahezu vollständig ausgeschlossen werden, wenn das Farbspektrum der Lichtquelle an das Farbspektrum von in die Flüssigkristallanzeige einfallendem Auflicht angepaßt ist. Da das Farbspektrum des Auflichts, bei dem es sich üblicherweise um Umgebungshelligkeit (d. h. Sonnenlicht) handelt, unter anderem jahres- und tageszeitabhängig variieren kann, ist mit einer ein festes Farbspektrum aufweisenden Lichtquelle nicht unter allen Bedingungen eine identische Übereinstimmung ihres Farbspektrums mit dem des Auflichts zu gewährleisten. Abhilfe könnte hier eine Einstellbarkeit des Farbspektrums der Lichtquelle schaffen, was jedoch sehr aufwendig und kostenintensiv ist. Jedoch kann von einem mittleren, innerhalb weiter Grenzen konstanten Farbspektrum des Auflichts ausgegangen werden, so daß bei einer Anpassung der Lichtquelle hieran für nahezu alle relevanten Anwendungsfälle die Farbverfälschungen ausgeschlossen werden können.

Gemäß einer anderen Weiterbildung der Erfindung ist es zudem von besonderem Vorteil, wenn vor dem Frontpolarisationsfilter und/oder zwischen der Lichtquelle und der Lichteinkoppelfläche ein Spektralfilter angeordnet ist. Damit wird in einfacher Weise das Farbspektrum des Auflichts und/oder der Lichtquelle festgelegt und Farbverfälschungen der Anzeige damit sicher ausgeschlossen.

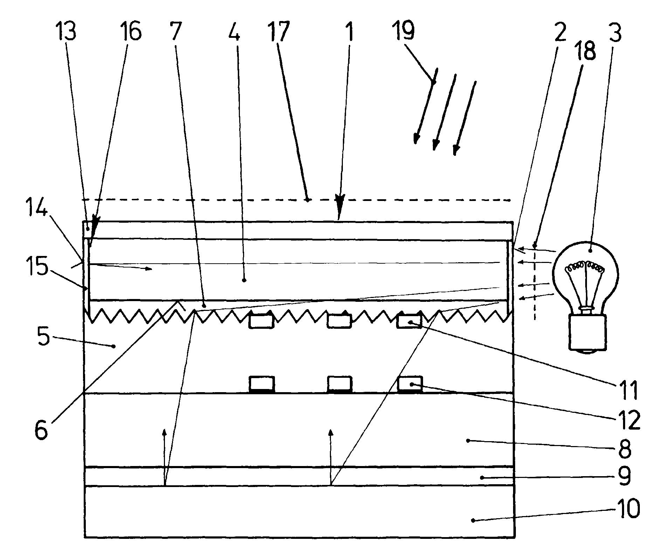

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer Seitenansicht den Aufbau einer in eine hier nicht weiter dargestellte Instrumententafel oder Mittelkonsole eines Kraftfahrzeugs eingebaute Flüssigkristallanzeige 1. Die Flüssigkristallanzeige 1 hat eine seitlich in eine Lichteinkoppelfläche 2 einstrahlende Lichtquelle 3, mittels der die aktive Beleuchtung für Darstellungen der Flüssigkristallanzeige 1 bei unzureichender Umgebungshelligkeit ermöglicht wird. Hierzu trifft das von der Lichtquelle 3 ausgehende Licht zunächst auf ein als Lichtleiter ausgeführtes Substrat 4, welches an seiner einer Flüssigkristallzelle 5 zugewandten Oberfläche 6 mit einem Lichtumlenkelement 7 versehen ist. Durch dieses als Mikrostrukturelement ausgeführte Lichtumlenkelement 7 wird das einstrahlende Licht abgelenkt und fällt anschließend zunächst durch ein weiteres, rückwärtiges Substrat 8 und einen Rückpolarisationsfilter 9. An einem hinter dem Rückpolarisationsfilter 9 angeordneten, reflektiven Element 10 wird das Licht reflektiert und strahlt anschließend in umgekehrter Richtung als polarisiertes Licht in die Flüssigkristallzelle 5 ein. Zwei jeweils mit einem der beiden Substrate 4, 8 verbundene Elektroden 11, 12 ermöglichen nach dem an sich bekannten Prinzip durch Anlegen einer elektrischen Spannung eine Orientierung nicht dargestellter Flüssigkristallmoleküle, die somit mittels eines Frontpolarisationsfilters 13 an einer Vorderseite 14 der Flüssigkristallanzeige 1 je nach Ansteuerung eine sichtbare, helle oder lichtundurchlässige Darstellung eines jeweiligen Segments erkennbar werden lassen. Um die Helligkeitsverluste der in die Lichteinkoppelfläche 2 einstrahlenden und als Entladungslampe ausgeführten Lichtquelle 3 möglichst gering zu halten, ist eine Stirnfläche 15 des Substrates 4 mit einem Reflektor 16 versehen, der das unerwünschte Austreten des Lichtes verhindert. Im Gegensatz zu einem bekannten transflektiven Betrieb wird so einerseits die Bauhöhe der Flüssigkristallanzeige 1 wesentlich reduziert, andererseits werden Farbverfälschungen, die bei Verwendung eines Transflektors unvermeidlich sind, nahezu ausgeschlossen.

Der Zeichnung ist ferner zu entnehmen, daß in diesem Ausführungsbeispiel vor dem Frontpolarisationsfilter 13, d. h. auf der einem Betrachter zugewandten Seite der Flüssigkristallanzeige 1, ein auch als Wellenlängenfilter bezeichneter Spektralfilter 17 angeordnet ist. Durch drei Pfeile symbolisch dargestelltes, in die Flüssigkristallanzeige 1 einfallendes Auflicht 19, das üblicherweise von Umgebungshelligkeit gebildet wird, durchdringt somit den Spektralfilter 17. Zusätzlich ist zwischen der Lichtquelle 3 und der Lichteinkoppelfläche 2 ein weiterer Spektralfilter 18 angeordnet, der von von der Lichtquelle 3 ausgesandtem Licht durchdrungen wird. Durch die Spektralfilter 17, 18 sind die Farbspektren des Auflichts 19 und der Lichtquelle 3 aufeinander abgestimmt, so daß unabhängig davon, ob das Auflicht 19 oder die Lichtquelle 3 zur Darstellung auf der Flüssigkristallanzeige 1 genutzt wird, keinerlei Farbverfälschungen auftreten.

## Patentansprüche

1. Beleuchtbare Flüssigkristallanzeige, insbesondere in einem Kraftfahrzeug, mit einem Frontpolarisationsfilter, einem Rückpolarisationsfilter und einer durch zwei jeweils mit Elektroden verbundene Substrate eingeschlossenen Flüssigkristallzelle sowie einem hinter dem Rückpolarisationsfilter angeordneten, reflektiven Element, **dadurch gekennzeichnet**, dass die Flüssigkristallanzeige (1) ein Lichtumlenkelement (7) zur Umleitung von seitlich in eine Lichteinkoppelfläche (2) der Flüssigkristallanzeige (1) einfallendem Licht in Richtung der Flüssigkristallzelle (5) aufweist.

2. Flüssigkristallanzeige nach Anspruch 1, **dadurch gekennzeichnet**, dass das Lichtumlenkelement (7) an einer der Flüssigkristallzelle (5) zugewandten Oberfläche (6) zumindest eines der beiden Substrate (4, 8) angeordnet ist.

3. Flüssigkristallanzeige nach Anspruch 1 oder 2, **dadurch gekennzeichnet**, dass das Lichtumlenkelement (7) an einer einem Betrachter der Flüssigkristallanzeige (1) abgewandten Seite des Rückpolarisationsfilters (9) angeordnet ist.

4. Flüssigkristallanzeige nach einem der vorhergehenden Ansprüche, **dadurch gekennzeichnet**, dass eines der Substrate (4, 8) die Lichteinkoppelfläche (2) aufweist und dass die Lichteinkoppelfläche (2) an einer Stirnfläche (15) des die Lichteinkoppelfläche (2) aufweisenden Substrates (4, 8) angeordnet ist.

5. Flüssigkristallanzeige nach einem der vorhergehenden Ansprüche, **dadurch gekennzeichnet**, dass eine der Lichteinkoppelfläche (2) gegenüberliegende Stirnfläche (15) der Flüssigkristallanzeige (1) mit einem Reflektor (16) versehen ist.

6. Flüssigkristallanzeige nach einem der vorhergehenden Ansprüche, **dadurch gekennzeichnet**, dass das Lichtumlenkelement (7) als eine Strukturfläche ausgeführt ist.

7. Flüssigkristallanzeige nach einem der vorhergehenden Ansprüche, **dadurch gekennzeichnet**, dass die Flüssigkristallanzeige (1) eine in die Lichteinkoppelfläche (2) einstrahlende Lichtquelle (3) aufweist.

8. Flüssigkristallanzeige nach Anspruch 7, **dadurch gekennzeichnet**, dass die Lichtquelle (3) eine Entladungslampe ist.

9. Flüssigkristallanzeige nach Anspruch 7, **dadurch gekennzeichnet**, dass die Lichtquelle eine Leuchtdiode (LED) aufweist.

10. Flüssigkristallanzeige nach einem der Ansprüche 7 bis 9, **dadurch gekennzeichnet**, dass das Farbspektrum der Lichtquelle (3) an das Farbspektrum von in die Flüssigkristallanzeige (1) einfallendem Auflicht (19) angepaßt ist.

11. Flüssigkristallanzeige nach einem der vorhergehenden Ansprüche, **dadurch gekennzeichnet**, dass vor dem Frontpolarisationsfilter (13) und/oder zwischen der Lichtquelle (3) und der Lichteinkoppelfläche (2) ein Spektralfilter (17; 18) angeordnet ist.
